# EUROPÄISCHE PATENTSCHRIFT

(11) **EP 1 329 007 B1**
(45) Veröffentlichungstag und Bekanntmachung des Hinweises auf die Patenterteilung: **11.07.2007**
(21) Anmeldenummer: 01974268.3
(22) Anmeldetag: 20.09.2001
(51) Int. Cl.: H02G 3/32

(54) **VORRICHTUNG ZUR HALTERUNG UND/ODER BEFESTIGUNG VON FLACHEN GEGENSTÄNDEN**
DEVICE FOR RETAINING AND/OR FIXING FLAT OBJECTS
SYSTEME POUR ATTACHER ET/OU FIXER DES OBJETS PLATS

(30) Priorität: 14.10.2000 DE 10051120
(43) Veröffentlichungstag der Anmeldung: 23.07.2003
(73) Patentinhaber: A. RAYMOND ET CIE, 38000 Grenoble (FR)
(72) Erfinder: GOMBERT, Stéphane, F-38000 Grenoble (FR)
(74) Vertreter: Rüttgers, Joachim
(86) Internationale Anmeldenummer: PCT/EP2001/010852
(87) Internationale Veröffentlichungsnummer: WO 2002/033795

(56) Entgegenhaltungen:
- DE-A- 2 505 628
- JP-A- 11 122 759
- JP-A- 11 346 423

## Beschreibung

Die Erfindung bezieht sich auf eine Vorrichtung zur Halterung und /oder Befestigung von flachen Gegenständen, insbesondere zur Befestigung von Flachbandkabeln an einer Trägerplatte, mit einer Grundplatte, von der zueinander beabstandet zwei elastisch spreizbare Fortsätze senkrecht abragen, deren Enden durch einen dreiteiligen Steg verbunden sind, dessen Gesamtlänge größer ist als der Abstand zwischen den beiden Fortsätzen und dessen drei Teile untereinander und mit den Enden der Fortsätze scharnierartig verbunden sind, so dass die Vorrichtung eine Lösestellung, in der die Grundplatte von dem dreiteiligen Steg dachartig überwölbt ist, und eine Schließstellung, in der das mittlere Teil des Steges auf der Grundplatte aufliegt, einnehmen kann (siehe DE-A-2 505 628).

Bei Flachbandkabeln sind eine Anzahl von Leiterbahnen mit ihren Anschlüssen in einer Ebene nebeneinander auf einer dünnen, elektrisch isolierenden Trägerschicht aufgebracht. Sie können sehr platzsparend an Trägerplatten, z.B. an Karosserieteilen von Kraftfahrzeugen, auf bestimmten, zuvor festgelegten Bahnen verlegt werden. Dabei ist es erforderlich, sie in Abständen an der Trägerplatte zu befestigen.

Durch die französische Patentschrift 1.593.626 ist eine Vorrichtung bekannt, die sich zur Halterung eines flachen Gegenstandes und auch zu seiner Befestigung an einem Träger gedacht ist. Die Vorrichtung besteht aus einer Grundplatte, auf der spiegelbildlich und beabstandet zueinander zwei L-förmige Schenkel befestigt sind; deren vorstehende Enden sind durch einen dreiteiligen Steg miteinander verbunden, wobei die Gesamtlänge des Steges größer ist als der Abstand zwischen den beiden Schenkeln und die Verbindungsstellen der drei_plattenförmigen Teile des Steges untereinander aber auch mit den Schenkelenden scharnierartig ausgebildet sind, so dass die Stegteile zueinander und in Bezug auf die Schenkel Schwenkbewegungen um diese Verbindungsstellen ausführen können. Die Vorrichtung kann eine offene und eine geschlossene Stellung einnehmen, wobei in der offenen Stellung die seitlichen Teile des Steges mit den L-förmigen Schenkeln einen stumpfen Winkel bilden und zusammen mit dem mittleren Teil des Steges die Grundplatte von den Schenkelenden aus dachartig überwölben, während in der geschlossenen Stellung die seitlichen Teile des Steges mit den L-förmigen Schenkeln einen spitzen Winkel bilden und das mittlere Teil des Steges mit Spannung auf der Grundplatte aufliegt. An der Grundplatte können Mittel zur Befestigung an einem Träger vorgesehen werden. Zwischen der Grundplatte und dem mittleren Stegteil kann eine flacher Gegenstand eingespannt werden, indem dieser im geöffneten Zustand der Vorrichtung auf die Grundplatte aufgelegt wird und anschließend durch Druck auf die gelenkig miteinander verbundenen Teile des Steges dessen mittleres Teil zur Auflage auf den Gegenstand gebracht wird.

In der französischen Patentschrift ist die Vorrichtung beispielhaft in der Anwendung als Hosenbügel beschrieben. Für den mit der vorliegenden Erfindung bevorzugt verfolgten Zweck, nämlich der Befestigung von Flachbandkabeln an einer Trägerplatte, insbesondere an Karosserieteilen von Kraftfahrzeugen, ist die bekannte Vorrichtung nicht optimal geeignet. Die Vorrichtung kann sich z.B. durch Erschütterung und/oder Materialermüdung spontan öffnen, so dass die Befestigung oder Halterung unbeabsichtigt gelöst wird. Dies ist besonders nachteilig, wenn die Vorrichtung, wie es dabei normalerweise geschieht, an schwer zugänglichen oder nach der Fertigstellung des Kraftfahrzeugs praktisch nicht mehr zugänglichen Stellen angebracht wird. Außerdem ist durch die flächige Auflage des mittleren Stegteils auf der Grundplatte bzw. dem dazwischen liegenden Gegenstand der Anpressdruck und damit die sichere Halterung gemindert. Außerdem ist die beiläufig vorgeschlagene Art der Befestigung der Vorrichtung an einem Träger mit Hilfe einer in der Mitte der Grundplatte angeordneten Schraube unbefriedigend, da diese störend auf den zu befestigenden Gegenstand wirkt, im Falle eines Flachbandkabels dieses beschädigt werden kann.

Aufgabe der Erfindung ist es, eine Vorrichtung zu schaffen, die eine dauerhaft sichere Halterung und Befestigung insbesondere von Flachbandkabeln an einer Trägerplatte erlaubt; eine spontane Lockerung der Vorrichtung muss unmöglich sein. Dabei muss sie sich mit wenigen Handgriffen einfach und schnell anbringen und schließen bzw. wieder öffnen lassen und soll keine verlierbaren Teile aufweisen. Eine Beschädigung des Flachbandkabels muss ausgeschlossen sein.
Erfindungsgemäß wird dies dadurch erreicht, dass die Grundplatte aus zwei Endabschnitten zur Befestigung auf der Trägerplatte und einem mittleren Abschnitt besteht, der auf der Trägerplatte bzw. einem daran zu befestigenden flachen Gegenstand zur Auflage bringbar ist, dass am mittleren Teil des Steges nach unten abragende Einrastmittel vorgesehen sind, die mit einem Eingriffsloch in der Grundplatte in Eingriff bringbar sind. Durch das Einrasten der Einrastmittel, vorzugsweise nach unten ragenden Einrasthaken, in das Eingriffsloch wird die Vorrichtung sicher in ihrer Schließstellung gehalten, eine spontane Lösung aus dieser Stellung ist nicht möglich. Die seitliche Anordnung von Befestigungsmitteln schließt Beschädigungen am Flachbandkabel oder einem anderen flachen Gegenstand aus.

An den Längsseiten des mittleren Abschnitts der Grundplatte sind schräg nach unten ragende Stützstreifen angeformt, deren Längskanten über die Unterkante des mittleren Abschnitts der Grundplatte hinausragt. Durch die über die Stützstreifen reduzierte Auflagefläche der Vorrichtung auf einem zwischen ihr und der Trägerplatte befindlichen Flachbandkabel oder einem sonstigen flachen Gegenstand, der an der Trägerplatte befestigt werden soll, wird der Anpressdruck erhöht und damit die Halterung sicherer gemacht.

Auf dem mittleren Abschnitt der Grundplatte ist vorzugsweise ein mittiger Bügel vorgesehen, durch den das Eingriffsloch für vom mittleren Teil des Steges nach unten abragende Einrasthaken hindurchgeht. Der Bügel kann durch eine mittige Ausbuchtung auf der Oberseite und eine entsprechende Einbuchtung in der Unterseite des mittleren Abschnitts der Grundplatte gebildet sein.

In der Mitte der seitlichen Stützstreifen befindet sich je ein sich in Längsrichtung erstreckendes Langloch, durch das die untere Öffnung des Eingriffslochs mit einem Werkzeug zugänglich ist. So läßt sich bei Bedarf der Eingriff der Einrasthaken im Eingriffsloch und damit die Befestigung des Flachbandkabels wieder lösen, wobei die Vorrichtung unbeschädigt bleibt, also wiederverwendbar ist.

Zur Befestigung der Vorrichtung an einer Trägerplatte ist vorzugsweise in den beiden Endabschnitten der Grundplatte je ein Durchgangsloch vorgesehen; Durchmesser und gegenseitiger Abstand der Durchgangslöcher entsprechen dabei dem Durchmesser und gegenseitigen Abstand zweier auf der Trägerplatte angeordneter Bolzen, und die Vorrichtung wird zur Befestigung auf der Trägerplatte mit diesen Durchgangslöchern auf diese Bolzen aufgeschoben.

Diese auf der Trägerplatte angeordneten Bolzen sind vorzugsweise mit einer Riffelung und/oder Rippung versehen, und die von der Grundplatte abragenden Fortsätze weisen an ihren Enden spitz und schräg zur Seite zulaufende Außenkanten auf, die in den Bereich der Durchgangslöcher hineinragen. Durch die Spreizung der Fortsätze beim Niederdrücken des mittleren Teils des Steges kommen die Außenkanten der Fortsätze an der Riffelung und/oder Rippung der Bolzen in Eingriff, wodurch die Befestigung zusätzlich gesichert wird.

Die Erfindung wird im folgenden anhand der anhängenden Zeichnung beispielhaft näher beschrieben; es zeigen
- Fig. 1: eine perspektivische Ansicht der erfindungsgemäßen Vorrichtung,
- Fig. 2: eine Ansicht der Längsseite der Vorrichtung nach Fig. 1,
- Fig. 3: eine Seitenansicht der Vorrichtung nach Fig. 1,
- Fig. 4: eine Draufsicht auf die Vorrichtung nach Fig. 1 und
- Fig. 5: eine Ansicht der Vorrichtung gemäß Fig. 2 im auf einer Trägerplatte fertig montierten und gespannten Zustand.

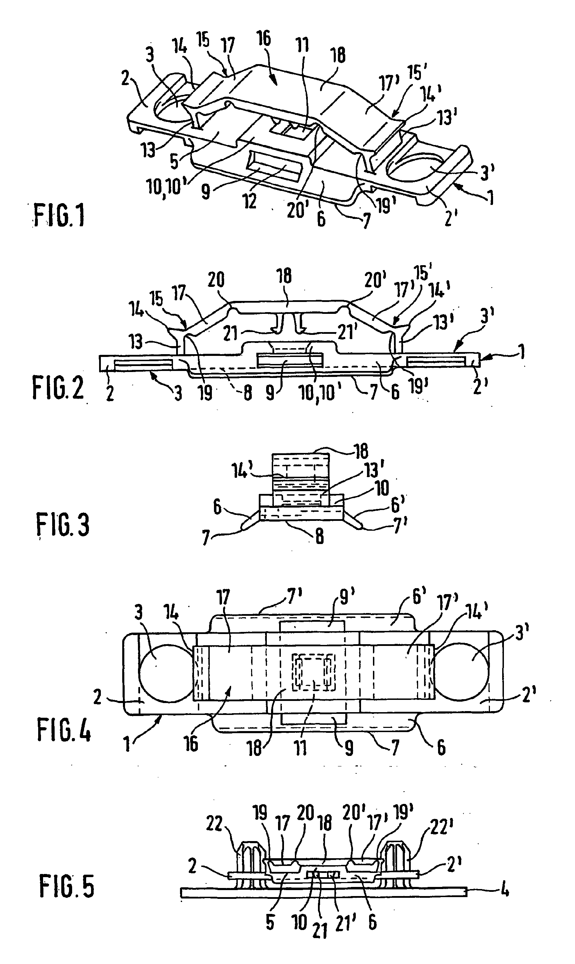

Die Vorrichtung besteht aus einer rechteckigen, länglichen Grundplatte **1,** die in ihren beiden Endabschnitten **2, 2'** je ein Durchgangsloch **3, 3'** zur Befestigung an einer Trägerplatte **4** (siehe Fig. 5) aufweist. Vom zwischen den beiden Durchgangslöchern **3, 3'** befindlichen mittleren Abschnitt **5** der Grundplatte **1** ragen seitlich schräg nach unten Stützstreifen **6, 6'** ab; dabei ragt die freie Längskante **7** dieser Stützstreifen **6, 6'** um eine geringes Maß über die Unterkante **8** der Grundplatte **1** hinaus. Mittig weisen die beiden Stützstreifen **6, 6'** je ein sich in Längsrichtung erstreckendes Langloch **9, 9'** auf. Auf der Oberseite des mittleren Abschnitts **5** der Grundplatte **1** ist in der Mitte ein sich in Längsrichtung erstreckender Bügel **10** vorgesehen, der wiederum in seiner Mitte ein durchgehendes Eingriffsloch **11** aufweist. Der Bügel **10** kann beispielsweise gebildet sein durch eine mittige Ausbuchtung **10'** auf der Oberseite des mittleren Abschnitts **5,** der eine Einbuchtung **12** auf der Unterseite entspricht; die Öffnung des Eingriffslochs **11** auf der Unterseite des Bügels **10** bzw. an der Einbuchtung **12** ist durch die Langlöcher **9, 9'** der beiden Stützstreifen **6, 6'** mit einem Instrument oder Werkzeug erreichbar.

Am Übergang der Endabschnitte **2, 2'** in den mittleren Abschnitt **5** der Grundplatte **1** ist auf deren Oberseite jeweils ein senkrechter Fortsatz **13, 13'** angeformt, die beide an ihren oberen Enden je eine seitlich spitz auslaufende Außenkante **14, 14'** aufweisen, die um ein geringes Maß über die Durchgangslöcher **3, 3'** der Grundplatte **1** ragen. Die Fortsätze **13, 13'** sind durch einen den mittleren Abschnitt 5 der Grundplatte **1** überwölbenden Steg **16** miteinander verbunden. Dieser Steg **16** besteht aus zwei Seitenteilen **17, 17'** und einem mittleren Teil **18,** die untereinander bzw. die Seitenteile **17, 17'** einseitig mit den oberen Enden **15, 15'** der Fortsätze **13, 13'** scharnierartig verbunden sind. Alle Stegteile **17, 17', 18** sind plattenförmig ausgebildet und die Scharniere **19, 19'** und **20, 20'** können durch Materialverdünnungen an den Übergängen, als sogenannte Filmscharniere, ausgebildet sein. Das mittlere Teil **18** des Stegs **16** verläuft parallel zur Grundplatte **1,** die Seitenteile **17, 17'** verlaufen spiegelbildlich schräg zwischen dem mittleren Teil **18** und den beiden Fortsätzen **13, 13'.** An der Unterseite des mittleren Teils **18** sind zwei nach unten gerichtete, spiegelbildlich voneinander wegweisende Einrasthaken **21, 21'** angeformt.

Um mit der oben beschriebenen Vorrichtung einen flachen Gegenstand, beispielsweise ein Flachbandkabel, auf einer Trägerplatte **4** befestigen zu können, sind auf dieser Trägerplatte **4** an den Befestigungsstellen gemäß Fig. 5 jeweils zwei Bolzen **22, 22'** in einem Abstand zueinander angebracht, der dem Abstand der beiden Durchgangslöcher **3, 3'** in den Endabschnitten **2, 2'** der Grundplatte **1** entspricht. An ihrem Umfang weisen die Bolzen **22, 22'** eine Rippung und/oder Riffelung auf. Der zu befestigende, flache Gegenstand, im hier bevorzugten Beispiel also das Flachbandkabel, wird zunächst zwischen die beiden Bolzen **22, 22'** und auf die Trägerplatte.**4** gelegt. Danach wird die oben beschriebene Vorrichtung mit ihren seitlichen Durchgangslöchern **3, 3'** auf die Bolzen **22, 22'** aufgeschoben, bis die Stützstreifen **6, 6'** schließlich das Flachbandkabel fest an die Trägerplatte **4** andrücken, wobei die Fortsätze **13, 13'** an ihren Außenkanten **14, 14'** zunächst leicht elastisch zurückgebogen werden. Anschließend wird das mittlere Teil **18** des Steges **16** nach unten gedrückt, so dass die von ihm nach unten abragenden Einrasthaken **21, 21'** in das Eingriffsloch **11** im Bügel **10** auf dem mittleren Abschnitt **5** der Grundplatte **1** eingreifen und daran einrasten. Da die Gesamtlänge des Steges **16** größer ist als der Abstand zwischen den beiden Fortsätzen **13, 13',** werden diese dabei nach außen gedrückt, so dass ihre spitz zulaufenden Außenkanten **14, 14'** an die Bolzen **22, 22'** angedrückt werden und in deren Rippung oder Riffelung eingreifen. Das Flachbandkabel wird nun durch die Stützstreifen **6, 6'** fest gegen die Trägerplatte **4** gepresst und festgehalten, wobei der Anpressdruck infolge der geringen Aufstandsfläche der Stützstreifen **6, 6'** gegenüber der bekannten Vorrichtung erhöht ist. Durch den Eingriff der Einrasthaken **21, 21'** im Eingriffsloch **11** und der Außenkanten **14, 14'** an den Bolzen **22, 22'** wird die Vorrichtung in dieser Position doppelt arretiert und sicher gehalten, so dass eine spontane Lösung aus dieser Stellung nicht möglich ist.

Sollte es notwendig werden, das Flachbandkabel oder einen anderen flachen Gegenstand aus dieser Befestigung zu lösen, so können die Einrasthaken **21, 21'** mit einem Werkzeug durch eines der Langlöcher **9, 9'** in den Stützstreifen **6, 6'** hindurch aus ihrem Eingriff im Eingriffsloch **11** gelöst werden, so dass der Steg **16** wieder seine den mittleren Abschnitt **5** der Grundplatte **1** überwölbende Position einnehmen kann und die Vorrichtung abgehoben werden kann. Dabei bleibt die Vorrichtung unbeschädigt und intakt und kann ohne weiteres wieder verwendet werden. Infolge des arretierenden Eingriffs der Einrasthaken **21, 21'** in dem Eingriffsloch **11** ist die sichere Halterung des Flachbandkabels oder eines anderen flachen Gegenstandes auch nach mehrfacher Wiederverwendung der Vorrichtung und trotz einer dabei eventuell auftretenden Materialermüdung gewährleistet.

### Bezugszeichenliste:

- 1: Grundplatte
- 2, 2': Endabschnitte
- 3, 3': Durchgangsloch
- 4: Trägerplatte
- 5: mittlerer Abschnitt (Grundplatte)
- 6, 6': Stützstreifen
- 7: Längskanten
- 8: Unterkante
- 9, 9': Langloch
- 10: Bügel
- 10': Ausbuchtung
- 11: Eingriffsloch
- 12: Einbuchtung
- 13, 13': Fortsätze
- 14, 14': Außenkante
- 15, 15': oberes Ende
- 16: Steg
- 17, 17': Seitenteile (Steg)
- 18: mittleres Teil (Steg)
- 19, 19': (Film-) Scharniere
- 20, 20': (Film-) Scharniere
- 21, 21': Einrasthaken (Einrastmittel)
- 22, 22': Bolzen

## Patentansprüche

1. Vorrichtung zur Halterung und/oder Befestigung von flachen Gegenständen, insbesondere von Flachbandkabeln, an einer Trägerplatte ( 4 ) mit einer Grundplatte ( 1 ), von der, zueinander beabstandet, zwei elastisch spreizbare Fortsätze ( 13, 13') senkrecht abragen, deren Enden durch einen dreiteiligen Steg ( 16 ) verbunden sind, dessen Gesamtlänge größer ist als der Abstand zwischen den beiden Fortsätzen ( 13, 13' ) und dessen drei Teile untereinander und mit den Enden der Fortsätze ( 13, 13' ) scharnierartig verbunden sind, so dass die Vorrichtung eine Lösestellung, in der die Grundplatte ( 1 ) von dem dreiteiligen Steg ( 16 ) dachartig überwölbt ist, und eine Schließstellung, in der das mittlere Teil ( 18 ) des Steges ( 16 ) auf der Grundplatte ( 1 ) aufliegt, einnehmen kann, **dadurch gekennzeichnet, dass** die Grundplatte **(1)** aus zwei Endabschnitten **(2, 2')** zur Befestigung auf der Trägerplatte **(4)** und einem mittleren Abschnitt **(5)** besteht, der auf der Trägerplatte **(4)** zur Auflage bringbar ist und dass am mittleren Teil **(18)** des Steges **(16)** nach unten abragende Einrastmittel **(21, 21')** vorgesehen sind, die mit einem Eingriffsloch **(11)** in der Grundplatte **(1)** in Eingriff bringbar sind.

2. Vorrichtung nach Anspruch 1, **dadurch gekennzeichnet, dass** an den Längsseiten des mittleren Abschnitts **(5)** der Grundplatte **(1)** schräg nach unten ragende Stützstreifen **(6, 6')** angeformt sind, deren Längskanten **(7)** über die Unterkante **(8)** des mittleren Abschnitts **(5)** der Grundplatte **(1)** hinausragen.

3. Vorrichtung nach Anspruch 1, **dadurch gekennzeichnet, dass** auf dem mittleren Abschnitt **(5)** der Grundplatte **(1)** ein mittiger Bügel **(10)** vorgesehen ist, durch den das Eingriffsloch **(11)** für vom mittleren Teil **(18)** des Steges **(16)** nach unten abragende Einrasthaken **(21, 21')** hindurchgeht.

4. Vorrichtung nach Anspruch 2, **dadurch gekennzeichnet, dass** sich in der Mitte der seitlichen Stützstreifen **(6, 6')** je ein sich in Längsrichtung erstreckendes Langloch **(9, 9')** befindet, durch das die untere Öffnung des Eingriffslochs **(11)** mit einem Werkzeug zugänglich ist.

5. Vorrichtung nach Anspruch 3, **dadurch gekennzeichnet, dass** der Bügel **(10)** durch eine mittige Ausbuchtung **(10')** auf der Oberseite und eine entsprechende Einbuchtung **(12)** in der Unterseite des mittleren Abschnitts **(5)** der Grundplatte **(1)** gebildet ist.

6. Vorrichtung nach Anspruch 1, **dadurch gekennzeichnet, dass** in den beiden Endabschnitten **(2, 2')** der Grundplatte **(1)** je ein Durchgangsloch **(3, 3')** vorgesehen ist, deren Durchmesser und Abstand zueinander dem Durchmesser und gegenseitigen Abstand zweier auf der Trägerplatte **(4)** angeordneter Bolzen **(22, 22')** entspricht und dass die Vorrichtung zur Befestigung auf der Trägerplatte **(4)** mit diesen Durchgangslöchern **(3, 3')** auf diese Bolzen **(22, 22')** aufschiebbar ist.

7. Vorrichtung nach Anspruch 6, **dadurch gekennzeichnet, dass** die auf der Trägerplatte **(4)** angeordneten Bolzen **(22, 22')** mit einer Riffelung und/oder Rippung versehen sind und die von der Grundplatte **(1)** abragenden Fortsätze **(13, 13')** an ihren Enden spitz und schräg zur Seite zulaufende Außenkanten **(14, 14')** aufweisen, die bis in den Bereich der Durchgangslöcher **(3, 3')** hineinragen und dass durch die Spreizung der Fortsätze **(13, 13')** beim Niederdrücken des Mittelteils **(18)** des Steges **(16)** die Außenkanten **(14, 14')** der Fortsätze **(13, 13')** an der Riffelung und/oder Rippung der Bolzen **(22, 22')** in Eingriff bringbar sind.

## Claims

1. Device for mounting and/or fixing flat articles, and particularly ribbon cables, on or to a carrier plate (4), having a base (1) from which, at a spacing from one another, two extensions (13, 13') able to be spread apart elastically project away perpendicularly, the ends of which extensions (13, 13') are connected by a bridge (16) in three parts whose overall length is greater than the spacing between the two extensions (13, 13') and whose three parts are connected to one another and to the ends of the extensions (13, 13') in a hinge-like manner, thus enabling the device to assume a released position in which the three-part bridge (16) arches over the base (1) after the fashion of a roof, and a closed position in which the centre part (18) of the bridge (16) rests on the base (1), **characterised in that** the base (1) comprises two end portions (2, 2') for fixing to the carrier plate (4) and a centre portion (5) which can be brought into contact with the carrier plate (4), and **in that** downwardly projecting latching means (21, 21') which can be brought into engagement with an engaging hole (11) in the base (1) are provided on the centre part (18) of the bridge (16).

2. Device according to claim 1, **characterised in that** integrally formed on the longitudinal sides of the centre portion (5) of the base (1) are support strips (6, 6') which project obliquely downwards and whose longitudinal edges (7) project out beyond the bottom edge (8) of the centre portion (5) of the base (1).

3. Device according to claim 1, **characterised in that** there is provided on the centre portion (5) of the base a central arch (10) through which the engaging hole (11) for latching hooks (21, 21') projecting downwards from the centre part (18) of the bridge (16) passes.

4. Device according to claim 2, **characterised in that** situated in the centre of each of the lateral support strips (6, 6') there is a slotted hole (9, 9') extending in the longitudinal direction through which access to the bottom opening of the engaging hole (11) can be gained with a tool.

5. Device according to claim 3, **characterised in that** the arch (10) is formed by a central joggle (10') on the upper side of the centre portion (5) of the base (1) and a corresponding indentation (12) in the underside thereof.

6. Device according to claim 1, **characterised in that** there is provided in each of the two end portions (2, 2') of the base (1) a through-hole (3, 3'), the diameter and spacing from one another of which through-holes (3, 3') correspond to the diameter and spacing from one another of two spigots (22, 22') arranged on the carrier plate (4), and **in that**, for fixing it to the carrier plate (4), the device can be inserted onto these spigots (22, 22') by the said through-holes (3, 3').

7. Device according to claim 6, **characterised in that** the spigots (22, 22') arranged on the carrier plate (4) are provided with corrugations and/or ribs and the extensions (13, 13') projecting away from the base (1) have, at their ends, outer edges (14, 14') which taper to a point sideways in an oblique direction and which project sufficiently to enter the region of the through-holes (3, 3'), and **in that**, as a result of the spreading apart of the extensions (13, 13') when the centre part (18) of the bridge (16) is pressed down, the outer edges (14, 14') of the extensions (13, 13') can be brought into engagement with the corrugations and/or ribs on the spigots (22, 22').

## Revendications

1. Dispositif de maintien et, ou encore, de fixation d'objets plats, notamment de câbles plats, sur une plaque faisant office de support (4), comprenant une plaque de base (1) dont font verticalement saillie deux segments expansibles par cédage élastique (13, 13'), disposés à une certaine distance l'un de l'autre, dont les extrémités sont reliées par une barrette entretoise formée de trois tronçons, dont la longueur totale est supérieure à l'intervalle d'écartement existant entre les deux segments (13, 13') et dont les trois tronçons constitutifs sont raccordés entre eux et avec les extrémités des segments (13, 13') de manière articulée, de telle sorte que le dispositif peut prendre une position de libération, dans laquelle la barrette entretoise (16) en trois parties forme à la façon d'un toit un dôme au-dessus de la plaque de base (1), et une position de fermeture dans laquelle le tronçon central (18) de la barrette entretoise (16) est en contact d'application sur la plaque de base (1), **caractérisé en ce que** la plaque de base (1) se compose de deux portions d'extrémité (2, 2') pour fixation sur la plaque faisant office de support (4) et d'une portion centrale (5) qui est destinée à être amenée en contact d'application sur la plaque faisant office de support (4) et **en ce que** des moyens d'accrochage faisant saillie vers le bas (21, 21') sont prévus sur le tronçon médian (18) de la barrette entretoise (16), qui sont destinés à être insérés en prise d'engagement dans un orifice d'encastrement (11) de la plaque de base (1).

2. Dispositif selon la revendication 1, **caractérisé en ce que** des lamelles d'appui faisant saillie vers le bas (6, 6') sont réalisées solidaires par formage des grands côtés de la portion centrale (5) de la plaque de base (1), dont les arêtes longitudinales (7) font saillie au-dessus de l'arête inférieure (8) de la portion centrale (5) de la plaque de base (1).

3. Dispositif selon la revendication 1, **caractérisé en ce qu'**il est prévu, sur la portion centrale (5) de la plaque de base (1), un pontet central (10), dans lequel est ménagé l'orifice d'encastrement (11) des crochets d'accrochage (21, 21') faisant saillie vers le bas depuis le tronçon médian (18) de la barrette entretoise (16).

4. Dispositif selon la revendication 2, **caractérisé en ce qu'**il est respectivement prévu dans la portion centrale des barrettes d'appui latérales (6, 6') un trou oblong (9, 9') s'étendant dans le sens longitudinal, en passant par lequel on peut accéder au moyen d'un outil à l'ouverture inférieure de l'orifice d'encastrement (11).

5. Dispositif selon la revendication 3, **caractérisé en ce que** le pontet (10) est constitué par un renflement convexe central (10') au niveau de la surface supérieure et un renflement concave correspondant (12) au niveau de la surface inférieure de la portion centrale (5) de la plaque de base (1).

6. Dispositif selon la revendication 1, **caractérisé en ce qu'**il est respectivement prévu, dans les deux portions d'extrémité '2, 2') de la plaque de base (1), un trou débouchant (3, 3'), dont le diamètre et l'écartement respectif correspondent au diamètre et à l'écartement respectif de deux tourillons (22, 22') disposés sur la plaque formant support (4) et **en ce que** le dispositif est destiné à être emmanché au niveau de ces trous débouchants (3, 3') sur ces tourillons (22, 22') pour être fixé sur la plaque faisant office de support (4).

7. Dispositif selon la revendication 6, **caractérisé en ce que** les tourillons (22, 22') prévus sur la plaque faisant office de support (4) sont munis de nervures et, ou encore, de striures et **en ce que** les segments (13, 13') faisant saillie depuis la plaque de base (1) comportent, au niveau de leurs extrémités, des arêtes extérieures (14, 14') se terminant en pointe et s'étendant dans le plan latéral suivant une disposition oblique, qui font saillie jusque dans le gabarit de passage des trous débouchants (3, 3') et **en ce que** par suite de l'écartement des segments (13, 13') provoqué par la pression d'application exercée sur le tronçon médian (18) de la barrette entretoise (16), les arêtes extérieures (14, 14') des segments (13, 13') peuvent venir s'appliquer en prise d'encastrement contre les nervures et, ou encore, les striures, des tourillons (22, 22').
